Europäisches Patentamt

European Patent Office

Office européen des brevets

(11) Publication number: **0 099 967**
**A1**

(12) **EUROPEAN PATENT APPLICATION**

(21) Application number: **83104454.0**

(22) Date of filing: **05.05.83**

(51) Int. Cl.³: **F 15 B 7/00**, F 04 B 43/08, B 62 D 3/00

(30) Priority: **07.05.82 IT 2112982**

(43) Date of publication of application: **08.02.84 Bulletin 84/6**

(84) Designated Contracting States: **DE FR GB**

(71) Applicant: **INDUSTRIE PIRELLI S.p.A., Piazzale Cadorna 5, I-20123 Milan (IT)**

(72) Inventor: **Tangorra, Giorgio, Via Ramazzotti, 12, Monza (Milan) (IT)**

(74) Representative: **Dr. Elisabeth Jung Dr. Jürgen Schirdewahn Dipl.-Ing. Claus Gernhardt, P.O. Box 40 14 68 Clemensstrasse 30, D-8000 München 40 (DE)**

(54) **Device for the transmission of mechanical work, particularly in remote control systems.**

(57) Device for the transmission of mechanical work to a receiver apparatus (19) comprising a hose (2) wound helicoidally around a cylindrical support (3), to which there is also fixed the central turn of the hose (2) filled with a core (10) having a cross section greater than that of the central turn itself. Over the hose (2) in its outermost part there is arranged a flexible continuous element (7, 8, 9) connected at its two ends to two flanges (4, 5) coaxial to the support (3). The hose (2) is filled with a liquid. The rotation of the support (3) in a determined direction relative to the two flanges (4, 5) causes the compression of the turns (30, 31) in one of the two tracts into which the hose (2) is subdivided with a direct expelling of the liquid into the receiver apparatus (19) for transforming the thrust of the liquid into a further movement.

DEVICE FOR THE TRANSMISSION OF MECHANICAL WORK
PARTICULARLY IN SERVO CONTROL SYSTEMS

The present invention refers to a device for the transmission of mechanical work, for example, in a servo control system.

Various devices are already known which are used in various fields of application for modifying mechanical work transmitted by an operator or by a machine to a special receiver apparatus, or even, for example, for reducing to a minimum the need for muscular force when a high resistance has to be overcome.

These devices, that are known in the art as servo controls, comprise generally various elements joined together for transforming, for example, torques or mechanical forces, or angles of rotation, from lower to higher values or vice versa.

These cited elements can be constituted by toothed wheels meshing one with another according to a determined ratio of gearing up or of gearing down.

Frequently these devices constitute not just an accessory element but an integral part of a machine for performing determined functions of great importance, in a continuous and reliable manner.

For example, it is known in particular motor vehicles to use a device commonly called power steering, that serves for lessening the fatigue of the driver himself when the vehicle is running along a particularly winding road, where continuous alternative rotary movements of the steering wheel are required.

As can be understood, in the cited application (as also in other applications) it is necessary to guarantee certain performances for long periods of operation with hence obviating those problems of wear and tear that could actually occur in the previously cited devices from the continuous contact between gears in rotation, or from the relative rubbing of one part against the other.

A further problem to be solved is to be able to use such devices on a machine that is already provided with numerous elements, such as, for example, hoses and lever systems, without effecting substantial modifications in order to find an adequate space for the desired lay out.

This signifies that a satisfactory solution has yet to be found as far as concerns an attempt to reduce the weight and the cost of the parts at play.

Therefore, one aim of the present invention is a device like the one cited above, that is capable simultaneously to solve the cited problems and to overcome the above mentioned drawbacks.

One object of the present invention is a device for the transmission of mechanical work, for example, in a servo control system, characterized by the fact of comprising a hose of elastomeric or similar material disposed helicoidally around a cylindrical support, with the turns of the hose determining in a cross section, an elliptic shaped area that is completely filled by a liquid, a continuous flexible and inextensible element being associated to the radially outermost part of the hose turns and being fixed at each end to a flange disposed around the support, and further characterized by means for hydraulic separation, inside the hose, of two tracts of equal length upstream and downstream of the central turn of the hose, means for fixing the central turn to the support, reinforcing means for the turns in planes transversal to the hose axis, means for the relative rotation, in one sense or the other, of the support in relation to the two flanges, and an apparatus disposed spaced apart from said support for transforming the rotation of the support in relation to the flanges into a further movement.

What forms yet another object of the invention is a power steering device, characterized by the fact that said rotatable support is connected to the steering wheel of the vehicle, and that said receiver apparatus by a shifting movement acts upon the two wheels of one axis of the vehicle.

The present invention will be better understood from the following detailed description, made solely by way of non limiting example with reference to the FIGURES of the attached drawings, wherein

FIG. 1    shows a plan view of a device of the invention in a more general form;

FIG. 2    shows a partial cross section of the device of FIG. 1;

FIG. 3    shows the position of the reinforcing elements of the hose of FIGURES 1 and 2;

FIG. 4    shows an example of a preferred realization of the device of FIG. 1.

There will now be described a device that can be used in a servo control system, and that can transmit mechanical work - for example a mechanical torque - between two parts, of which the second one is the receiver.

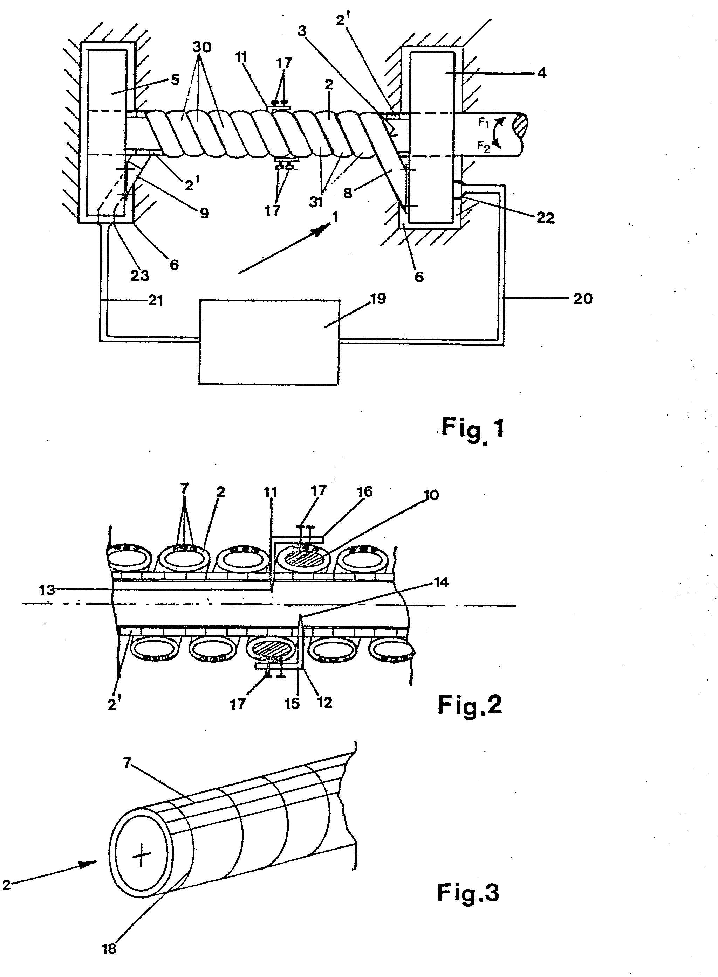

In its more general form, a device 1 comprises (FIG. 1) a hose 2 made of elastomeric material or of a flexible material having similar characteristics. The hose 2 is with the interpositioning of special anti friction washers 2' wound helicoidally around a cylindrical support 3, for example a shaft.

The shaft 3 ist supported and rotates freely on two flanges 4 and 5 or on similar elements, that are in their turn locked on a frame 6.

Special bearings can be foreseen between each flange 4, 5 and the shaft 3.

The turns of the hose 2 in their unloaded state are in a partly flattened condition with, however, an elliptical cross section (FIG.2). The hose 2 is completely filled by a liquid, for example oil.

The geometrical condition or configuration of the turns of the hose 2 is determined by the presence of a continuous flexible and inextensible element, associated to the radially outermost portion (as seen in FIG. 2) of the hose 2 and put under tension and having its ends fixed to the flanges 4 and 5.

Preferably, said element is constituted by steel cords 7 stretched longitudinally (FIG.2) and embedded in the outermost zone of the hose 2 along its entire helicoidal development. The cords 7 issue from the hose extremities, however, still remain embedded in two strips 8 and 9, connected to the two flanges 4 and 5 (FIG. 1).

Inside the hose 2, there are disposed means for hydraulic separation of two tracts of the hose 2 of equal length upstream and downstream of the central turn, and means for fixing the central turn to the shaft 3. Preferably, these means comprise a rigid core 10 filling substantially the central turn (FIG. 2) and two extensions 11 and 12 directed radially to the shaft 3, to which they are fixed at points 13 and 14. Said extensions 11, 12 are bent appropriately for forming lateral portions 15 and 16 overlying the central turn to which they are rigidly fixed, for example by screws 17.

The hose 2 comprises further reinforcing means, transversal to the direction of the longitudinal cords 7, for example a helicoidal element 18 (FIG. 3) consisting preferably of one or several cords of a textile material such as polyamide or some other material resistant to tension.

At any whatsoever end of the shaft 3 there are foreseen means for rotating the shaft 3 in both directions. Each rotation causes a squeezing or compressing of the respective one of the hose tracts.

The device also comprises an apparatus 19 disposed spaced apart from the group of elements that are mounted on the shaft 3. This apparatus 19 transforms rotation of the shaft 3 with respect to the flanges 4 and 5 into a further movement.

In particular, as described later on, the apparatus 19 receives liquid under pressure, determined by the squeezing of the turns of the respective one of the two tracts of the hose 2, and it utilizes this pressure for causing one of its elements to move.

In one possible form of realization, said apparatus 19 can comprise a fluid-dynamic cylinder, entirely filled with the same liquid which completely fills conduits 20 and 21, which connect apparatus 19 with hose 2, and the hose 2. The conduits 20 and 21 consist of an indeformable material, and they are connected to the hose 2 through fittings 22 and 23. In this embodiment, the piston of the fluid-dynamic cylinder is connected to any whatsoever device that can utilize a linear thrust that is directed in one sense or in the opposite sense.

The operation of the device according to the latter embodiment is as follows:

Let suppose that the shaft 3 is rotated in the direction indicated by arrow $F_2$ in FIG. 1. In this state, the rotation of the shaft 3 drags with it the central turn of the hose 2 thereby exercising a torque directed in the sense of winding the turns 30 (FIG. 1), but in the sense of unwinding the turns 31. Consequently, the increase of tension in the longitudinal cords 7 in the tract containing the turns 30 of the hose 2, and the relaxing of the tension in the other tract determines on one hand a total squeezing or compressing of the turns 30 and on the other hand an expansion of the turns 31.

Following the total squeezing of the turns 30, the oil which was contained in turns 30 will be expelled from the turns 30 and sent through the conduit 21 into the fluid-dynamic cylinder, represented by the apparatus 19, with pushing the relative piston towards the right and forcing the oil, that is contained in the part  opposite the piston itself, to move and be sent through the conduit 20 into the turns 31 of hose 2, which are already expanded by the rotation of the shaft 3.

Since, as has been stated, the piston is connected to a further element, for example to a shaft, the device can be used for transforming by remote control a mechanical torque into a command for a linear shifting.

A further form of realization of the device of the invention will now be described, wherein the apparatus 19 of FIG. 1 is apt for transforming the pressure of the liquid into an angular shifting.

The above said realization is new described with respect to an application of the device as a power steering device for motorvehicles.

In this instance, the receiver apparatus 19 (FIG. 1) is constituted by a structure that is similar to the structure represented in the upper portion of the same FIG. 1. The two similar structures are hydraulically connected at the ends by the conduits 20 and 21.

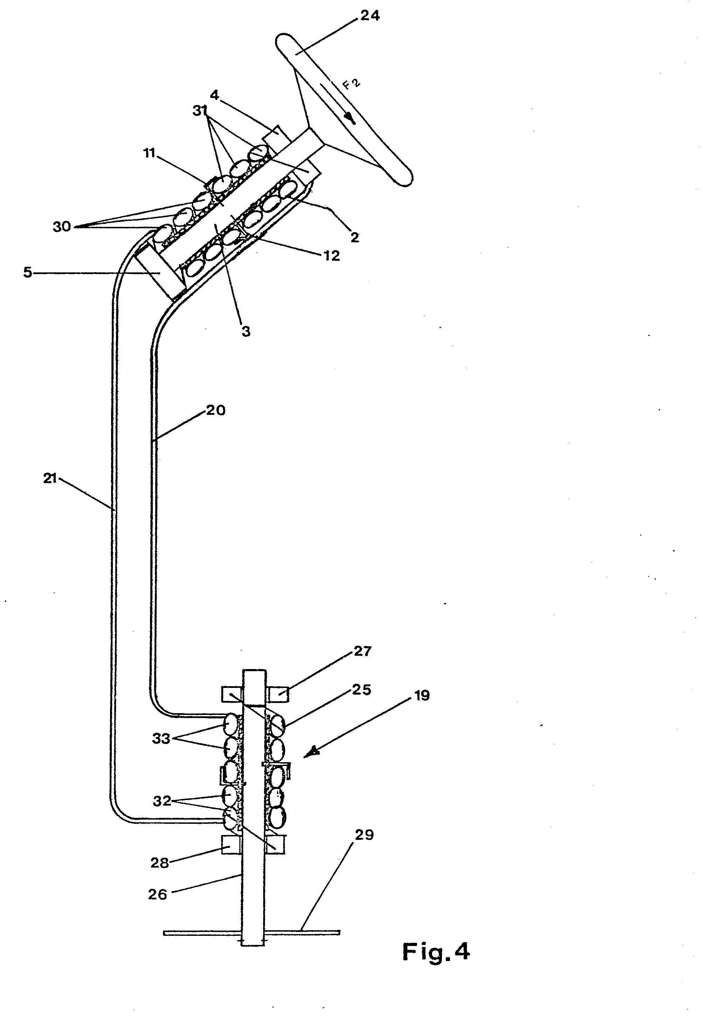

For a better clarification, the power steering device is illustrated schematically in FIG. 4, where there is still represented the complete upper portion of FIG. 1, with the addition of just the steering wheel 24 in the vicinity of the flange 4. The steering wheel 24 is secured to the shaft 3, which can freely rotate in the flanges 4 and 5, which according to FIG. 1 are fastened to the frame 6 which according to FIG. 4 is fastened to the supporting structure of the motorvehicle (not shown).

Therefore, since the upper portions of FIGURES 1 and 4 are identical, no further details will be described here.

In the lower portion of FIG. 4, there is the other structure that is similar to the structure connected to the driving wheel 24. In fact, as can be observed, this second structure comprises a second elastomeric hose 25 reinforced longitudinally and transversally and disposed helicoidally around a shaft 25, all this being effected in a similar way to that for the first hose 2 that is wound around the shaft 3, as it has been described.

Therefore, for the sake of simplicity there is briefly mentioned that the shaft 26 is supported between two flanges 27 and 28 to which are anchored both ends of the two tracts of equal length of hose 25, the central turn of which is locked to the shaft 26 and is internally filled by a rigid core for hydraulically separating said two tracts, as has already been explained in the instance of the hose 2. Similar to the flanges 4 and 5, also the flanges 27 and 28 are fastened to the supporting structure of the motorvehicle.

The cross section of the turns of the hose 25 has an elliptical configuration in the rest position, and the hose 25 is filled completely with a liquid.

The connection between the turns and the flanges 27, 28 and the position of the core inside the hose 25 are similar to what has already been explained for the hose 2.

Hence, corresponding to the turns 30 and 31 of the hose 2 comprised between the core that is present inside the central turn and the end flanges there are the turns 32 and 33 of hose 26. The turns 30 and 32 are connected to the conduit 21, whereas the turns 31 and 33 are connected to the conduit 20.

At one end of the shaft 26, there is applied a disc 29 provided, for example, with a toothing meshing with an endless screw (not shown) on a rod acting upon a known leverage system for turning the two wheels of a vehicle disposed on one and the same axis.

The operation of the device will now be described. Let suppose that the steering wheel 24 is rotated according to arrow $F_2$ in FIG. 4, because the vehicle shall follow a curved path.

0099967

Under these conditions the rotation of the shaft 3 to which steering wheel 24 is connected will complete squeezing of the turns 30 and the expansion of the turns 31. Thus, the oil will be pressed out from the turns 30 of the hose 2 and will be sent through the conduit 21 into the turns 32 of the hose 25 thus causing an expanding thereof due to the pressure of the oil.

Since the turns 32 are connected to the inextensible longitudinal cords between the flange 28 and the central turn connected to the shaft 26, there will be had inevitably a reduction in the number of turns 32, with a traction force acting upon the central turn and hence a rotation of the shaft 26 and with it, of the disc 29.

Following this, the endless screw meshing with the disc 29 will exert a horizontal thrust upon the known leverage systems, for the rotation of the wheels of one axis of the vehicle.

Moreover, since on the shaft 26 there are disposed the turns 33 of the second tract of the hose 25, and moreover, since their disposition is such as to cause a squeezing when the turns 32 of the first tract of the hose 25 are expanded, there will inevitably be had an immediate expulsion of oil, pushed forward through the conduit 20 towards the turns 31 of the hose 2, that are already expanded by the initial rotation of the steering wheel 24.

Hence, in following the curve, the rotation of the steering wheel 24 is aided gradually and continuously by the pressure of the oil entering the turns 31 of the hose 2 with maintaining the original torque on the shaft 3.

Till the present, there has been described and explained the device of the invention with reference to the transmission of mechanical work from one part to the other of the same device, without specifying the efficiency of the transmission. However, the device of the invention provides a reduction of the force to be applied by the operator for carrying out a determined work.

In fact, in the embodiment shown in FIG. 4 the number of turns 30 and 31 on the shaft 3 is greater than the number of turns 32 and 33 on the shaft 26, and moreover, the cross section of each turn of the hose 2 is lesser than the cross section of each turn of the hose 25. In this manner, at a parity of the volumes of liquid present in the two hoses 2 and 25 it is possible to carry out numerous rotations of shaft 3 by applying a modest torque to the wheel 24, while at the shaft 26 there is be obtained a high torque with a lesser number of rotations.

Therefore, quite advantageously it is possible to considerably reduce the muscular forces to be applied by the driver himself, what is particularly advantageous when the power steering described is used in vehicles for transporting goods (trucks).

The invention is advantageous, owing to the high degree of reliability it presents for diverse applications, for long periods of time and for the numerous and continuous work cycles involved.

In the first place, what must be pointed out, is the safe adaption of the system as far as regards the operations that are required.

In fact, the indeformability of the conduits 20 and 21, prevents any loss of even a minimum portion of the energy transmitted by the hose 2 to the apparatus 19 (FIG. 1).

Hence, the output between the energy received by the hose 25 and the energy transmitted by the hose 2, is the maximum possible, and the receiving part 19 readily conforms to the operator's control.

Moreover, the energy transmitted by the hose 2, is gradually taken up by the turns of one of the two tracts of the hose 25 (FIG. 4) owing to the presence of the resistant spiral twist of the transversal reinforcing element 7.

In this way, there is obtained a controlled expansion of the turns of the receiving part and a rotation of the disc 29 that is just as gradual and continuous. In practice, the system according to the inventive principle is constructed in such a way as to avoid any immediate expanding of the turns due to any excessive elastic yielding of the hose walls which could take place, for example, in the absence of the reinforcing element 7 without having any possibility of transmitting the greater part of the energy to the vehicle wheels and wasting a part of the energy in the useless work of the visco-elastic deformation of the hose.

Naturally, the cross sections of the hose 2 and the hose 25 could be reinforced in different manners, for example, by using special compounds or by the disposition of discontinuous fibres or reinforcing charges that are variably disposed.

In all of the previously described instances, it is, however, considered preferential to dispose the transversal reinforcements in the hose in such a way that the expanded cross section area of each turn assumes a value that is, at most, equal to the double of the elliptical cross section area of the turns in the unloaded state.

The device is also distinguishable as regards other eventual known solutions because of the absence practically of any deteriorations between the parts as they could take place, for example, in the case of mechanical meshings subjected during the transmission of torques to reciprocal impacts, especially when unforeseen clearances begin to occur between the various elements themselves.

What has also to be considered, is the high resistance of the device to fatigue stresses, that is due to the particular elasticity itself of the elastomeric material forming its fundamental part. Furthermore, there has to be pointed out here the favourable absence in the device of any sealing problems.

Moreover, the device comprises a further advantage of having a reduced encumbrance and of being of a modest weight, all of which has an evident positive bearing upon the costs of its application.

In fact, the main part of the device comprises elastomeric material having an evidently lesser weight with respect to the known devices that use gearings.

Hense, the device of the invention does not require any particular reinforcing of the suuporting structures which are already foreseen for sustaining the weight of devices suited for other purposes.

Moreover, what also results as being just as evident is how it is possible to distribute several turns in a single direction, by eliminating hence, extensions in other directions. There is therefore had an easy application of the device in the eventuality of free or empty spaces that are traceable in the structures, frames or various casings, that are already realized for a determined equipment.

Moreover, the device of FIG. 1 lends itself advantageously to various other applications. For example, referring to FIG. 1 it can be considered to connect one end of the shaft 3 through a lever to a vehicle wheel with placing in the center of the cylindrical container (represented by the apparatus 19), an elastically deformable wall placed in such a way as to sub-divide the container into two chambers occupied by the liquid. In this manner, an elastic or pneumatic system could be obtained for realizing a hydraulic suspension for a vehicle.

Although the present invention has been described and illustrated with reference to certain particular forms of application, what is intended as also being comprised within the ambit of the invention, are all those alternative variations that are accessible to a technician of the art. For example, with reference to FIG. 1 it is possible to fix the shaft 3 to the flanges 4 and 5 and to cause to rotate simultaneously, in the same sense, the flanges 4 and 5. Or else, for example, the apparatus 19 in the application relative to a power steering system could be constituted by a fluid dynamic cylinder having pistons acting upon the leverage system of the two wheels on one and the same axis of the vehicle.

With respect to the longitudinal cords 7 it should be stated that these cords 7 are present in the hose 2 only in that portion of the hose 2 which according to FIG. 3 is its upper portion. Stated in other words, the cords 7 are present only in that zone of the hose 2 in which they are shown in FIGURES 2 and 3. Preferably the said longitudinal cords 7 can be present in form of a strip of elastomeric material in which the cords 7 are embedded. The said strip can then be bound to the elastomeric material of the wall of the hose 2 and the ends 8 and 9 of the said strip are as mentioned above secured to the flanges 4 and 5. What is important is that the cords 7 are inextensible.

As far as the cords 18 (FIG. 3) are concerned one should understand that also these cords 18 are embedded into the elastomeric material of the hose 2.

In FIG. 3 the cords 7 and 18 are shown as lying on the outer surface of hose 2. One should, however, understand that this representation is selected only by the reason to show the position of cords 7 and 18 in a simple manner. In fact, the said cords 7 and 18 are embedded into the elastomeric material as mentioned above.

With respect to the core 10 it should still be stated that its cross section is greater than the cross section of the central turn (see FIG. 2) so that the elastomeric material of the central turn is somewhat stretched when the core 10 is arranged. Thereby a fluid tight separation between the two tracts of the hose 2 is ensured.

CLAIMS:

1.   Device for the transmission of mechanical work, particularly in a servo control system, characterized by comprising an elastomeric material (hose 2) disposed helicoidally around a cylindrical support (3) and having turns (30, 31) that determine in a cross section an elliptical     area that is completely filled by a liquid, a continuous flexible and inextensible element (7) being associated to the radially outermost part of the hose turns and being fixed at the ends to two flanges (4 and 5) disposed around the support, means (10) for the hydraulic separation inside the hose of two equal length tracts upstream and downstream of the central turn, means (11 to 17) for fixing the central turn to the support, reinforcing means (18) for the turns in planes transversal to the hose axis, means for the relative rotation of the support in relation to the two flanges in one or the other sense, and an apparatus (19) arranged speced apart from said support for transforming the rotation of the support in relation to the flanges to any other movement.

2.   Device as in claim 1, characterized my the fact that said support (3) is idly mounted inside of the said flanges (4, 5) which are secured to a frame (6).

3.   Device as in claim 1, characterized by the fact that said apparatus (19) transforms the mechanical torque applied to the support (3) to an angular rotation.

4.   Device as in any of the previous claims, characterized by the fact that said apparatus (19) comprises a second hose (25) disposed helicoidally around a second support (26) like the first hose (2), said two hoses being connected at their respective ends through two conduits (20, 21) of an indeformable material, said hoses and said conduits being completely filled with a liquid.

5. Device as in claim 4, characterized by the fact that said second support (26) comprises at one end a disc (29) which by meshing with an endless screw acts on a rod.

6. Device as in claim 1, characterized by the fact that said means for the hydraulic separation of the two tracts of the hose (2) comprise a core (10) inside the central turn, having cross section dimensions greater than that of the central turn, said central turn being shut from the outside on said core.

7. Device as in claim 1, characterized by the fact that the said means for fixing the central turn to the cylindrical support (3) comprise two radial extensions (11, 12') of the support, fixed to the opposite portions of the central turn in correspondence of a core (10) disposed inside the central turn.

8. Device as in claim 1, characterized by the fact that said reinforcing means comprise a spiralled elongated element (7).

9. Device as in claim 1, characterized by the fact that the elliptical cross section area of the turns (30, 31) of the hose (2) , when not loaded, is lesser than or at most equal to half of the area of the expanded turn.

10. Power steering system, characterized by a device as in claim 1, the support (3) of which is connected to the steering wheel (24) of a vehicle and said apparatus (19) acts upon a leverage system of a known type, connected to two wheels of one and the same axis of the vehicle.

1/2

Fig. 1

Fig.2

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | FR-A-2 394 701 (VICKERS) * Whole document * | 1 | F 15 B 7/00<br>F 04 B 43/08<br>B 62 D 3/00 |
| A | GB-A- 997 804 (FORD) | 1 | |
| A | US-A-1 375 678 (HOLLIS) | 1 | |
| A | US-A-3 229 590 (HUSKA) | 1 | |
| A | FR-A-2 025 616 (TEVES) | 1 | |
| A | US-A-2 377 170 (MORGAN) | 1 | |
| A | US-A-1 943 090 (SALENIUS) | 1 | |

TECHNICAL FIELDS SEARCHED (Int. Cl. 3)

F 15 B 7/00
F 15 B 15/00
B 62 D 3/00
F 04 B 47/00

The present search report has been drawn up for all claims

| Place of search THE HAGUE | Date of completion of the search 15-07-1983 | Examiner FLORES E. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503.03.82